# EUROPEAN PATENT APPLICATION

(11) **EP 1 990 674 A1**
(43) Date of publication of application: **12.11.2008**
(21) Application number: 07009326.5
(22) Date of filing: 09.05.2007
(51) Int. Cl.: G02B 27/01

(54) **Head-mounted display system**

(71) Applicant: Harman Becker Automotive Systems GmbH, 76307 Karlsbad (DE)
(72) Inventor: Rieger, Robby, 76307 Karlsbad-Ittersbach (DE)
(74) Representative: Bertsch, Florian Oliver

(57) **Abstract**

A head-mounted display system comprises a sensor (2) detecting surrounding information from the surrounding, a processing unit (20) processing the surrounding information received from the sensor (2), a display control unit (21) generating a display information to be displayed to an user (12) of the head-mounted display system from the processed surrounding information and a head-mounted display (13) displaying the display information to the user (12).

## Description

The present invention relates to a head-mounted display system, and in particular to a head-mounted display system for use in a vehicle or motor vehicle, for example an automobile or a truck, to a head-mounted display system for use on a motorbike, bicycle or when walking and hiking, and to a corresponding display method.

### Related art

In conventional vehicles, for example automobiles, cars and trucks, the driver of the vehicle steering the vehicle in general observes the environment surrounding the vehicle mainly by looking out from the inside of the vehicle to the outside through the windshield, side windows, and the rear window of the vehicle, either directly or indirectly by rear view mirrors. This causes a lot of problems.

First, the view out of the windows may be obstructed by structural parts of the vehicle, for example a pillar, window frames, head rests, or occupants of the vehicle, or may be degraded by rain or snow causing reflections especially at night or by oncoming light from the sun or from headlights of other vehicles. Additionally, certain areas in the surrounding of the vehicle, the so called blind angles, are hardly observable by the driver by using only the rear view mirrors without turning the head to the rear direction of the vehicle. Furthermore, in a conventional vehicle the driver has to observe several displays of the vehicle, for example a tachometer, control and warning lights, a navigation system, a radio system, and a mobile phone. This causes the driver in a conventional vehicle to direct his view away from the main driving direction into the direction of these displays increasing the danger of an accident.

Furthermore, also a rider of a motorbike or a bicycle suffers from problems mentioned above, e.g. observing the rear of the bike, monitoring displays of the bike, and retrieving information from a navigation system. Finally, also a hiker or a tourist visiting a city or the like, currently faces the problem, when using a mobile navigation device, that he/she has to hold the navigation device in his/her hands and does not pay attention to the way or path he/she is walking, when looking at the navigation device.

### Summary

Therefore, a need exists to provide to a person, e.g. driver of a vehicle or hiker, a non-obstructed and improved view of the surrounding and to provide the person with additional information, e.g. from the navigation system or the vehicle, without causing the person to lose visibility of the surrounding environment.

According to the present invention, these needs are met by a head-mounted display system as defined in claim 1 and a display method as defined in claim 18. The dependent claims define preferred and advantageous embodiments of the invention.

According to an aspect of the invention, a head-mounted display system is provided. The head-mounted display system comprises at least one sensor detecting surrounding information from the surrounding, a processing unit coupled with the at least one sensor for receiving the surrounding information and processing the surrounding information, a display control unit coupled with the processing unit generating a display information from the processed surrounding information, the display information is to be displayed to an user of the head-mounted display, and a head-mounted display coupled to the display control unit displaying the display information from the display control unit to the user. The at least one sensor may for example comprise a camera, a night vision device, a supersonic device, or a radar device providing environmental information of the surrounding of the vehicle. By presenting the user, e.g. a driver or occupant of a vehicle, the surrounding information detected by the at least one sensor, and processing the surrounding information before presenting the surrounding information as display information to the user, an improved an non-obstructed display information can be provided to the user. By displaying the display information to the user with a head-mounted display, the user receives an excellent display of the display information independent of illumination conditions, especially when used in a vehicle, independent of the illumination conditions inside and outside of the vehicle.

According to an embodiment of the head-mounted display system, the head-mounted display comprises a display incorporated into spectacles, wherein the display projects the display information as visual information to the user wearing the spectacles. By directly projecting the display information into the eyes of the user, a stereoscopic effect can be achieved with the head-mounted display.

According to an embodiment of the present invention, the processing unit processing the surrounding information generates a dimmed visual output information, an output information with increase contrast, an output information with reduced reflections, or an output information with increased brightness from the detected surrounding information. By processing the surrounding information as stated above, an improved display information can be presented to the user, and especially in case of a use in a vehicle, the driving safety can be increased when driving under difficult circumstances, for examples in case of oncoming light of oncoming cars or blinding sunlight at dusk and dawn, or when driving at foggy, rainy or snowy weather, especially at night.

Moreover, the display control unit of the head-mounted display system may generate a display information comprising a superposed routing information or may, in case of a use in a vehicle, generate a display information comprising a superposed vehicle information, containing information about the speed of the vehicle or a control state of the vehicle comprising warning indications concerning the cooling water temperature, the fuel gage, the oil gage, or the like.

The embodiment as stated above helps to reduce the number of displays provided in a vehicle which have to be observed by the driver of a vehicle and therefore, driving safety can be increased and, as the number of displays can be reduced, the cost for the car can be reduced.

The head-mounted display may also comprise a loudspeaker for outputting audible information to the user. The audible information may comprise indications concerning routing information or incoming phone calls or, in case of a use in a vehicle, warning hints concerning gages of the vehicle.

According to yet another embodiment of the present invention, the head-mounted display provides a transparent view, wherein the user can view directly the environment, as if he/she is not wearing the head-mounted display. The transparent view may be used in case the head-mounted display system detects a malfunction of one of the sensors or one of the components, i.e. the processing unit or the display control unit or the head-mounted display itself.

Therefore, in case of a malfunction, the user is still able to detect surrounding information and, in case of a use in a vehicle, to steer the vehicle conventionally without removing the head-mounted display which increases the driving safety when using the head-mounted display system. Additionally, the head-mounted display may provide the transparent view only for parts of the display area of the head-mounted display achieving an augmented reality comprising a combination of the processed display information and the real view directly through the head-mounted display.

Furthermore, the head-mounted display system may comprise additionally a line of sight sensor for detecting a line of sight of the user. The display control unit may then use the information of the line of sight sensor to generate a display information according to the line of sight of the user. Sensoring the line of sight of the user and generating a display information according to this line of sight, enables the user to receive a display information as if he was looking around without wearing the head-mounted display, but without having his sight obstructed by, e.g. pillars of a vehicle, head rests, or another occupant of the vehicle and having additionally the improved display information as described above. This provides in a vehicle an essential improvement of driving safety.

Also, the head-mounted display may comprise a microphone receiving speech from the user and the head-mounted display system may comprise an audio processing unit processing the received speech and, upon commands comprised in the received speech, the audio processing unit may control the processing unit, the display control unit, or other devices connected to the head-mounted system, for example a navigation system, a radio system, an entertainment system, a mobile phone, or a cruise control system of a vehicle.

When used in a vehicle, e.g. a car or truck, by a driver or occupant of the vehicle, the sensors of the head-mounted display system may be mounted at the outside of the vehicle detecting surrounding information comprising the surrounding of the vehicle. This helps to provide to the user of the head-mounted display a view, which is not obstructed by pillars of the vehicle, headrests or other occupants.

In this case, the head-mounted display system may provide as a part of the display information in the head-mounted display a rear view showing the surrounding behind the vehicle. In such an embodiment, the head-mounted display system not only replaces the rear view mirrors of a conventional vehicle but also provides a rear view with the improved display information as stated above, for example a dimmed display information or a display information with increase contrast, and provides further a rear view wherein death angles can be eliminated. Thus, the driving safety can be increased and the cost for the rear view mirrors may be saved.

Furthermore, the head-mounted display may provide the rear view as the display information when a reverse gear of the vehicle is selected. The rear view shows the surrounding behind the vehicle. A head-mounted display system like this supports the driver of the vehicle when parking the vehicle, especially when backing into a parking space. Conventionally used parking distance control systems are no longer needed then and therefore cost for the vehicle can be reduced.

According to another embodiment the head-mounted display system is used for hiking, walking or biking. In such an embodiment the sensors of the head-mounted display system are mounted at the head-mounted display detecting surrounding information comprising the surrounding of the user wearing the head-mounted display. This helps to provide to the user of the head-mounted display a view with additional routing and navigation information or indications for points of interest.

According to another aspect of the present invention a display method is provided. The display method comprises a detecting of surrounding information, a processing of the detected surrounding information, a generating of a display information which is to be displayed to an user, wherein the display information is generated from the processed surrounding information, and a displaying of the display information to the user via a head-mounted display. By using this display method e.g. in a vehicle like a car or truck to provide the occupant or driver of the vehicle with a pre-processed display information of the surrounding of the vehicle, the driving safety can be improved, and by using the head-mounted display as the only display for the driver of the vehicle, a lot of conventionally used displays, for example a display of an instrument panel of the vehicle, a navigation system, a car radio system, a car entertainment system or a mobile phone can be replaced by the head-mounted display and therefore cost for manufacturing of the car can be reduced.

According to an embodiment of the present invention, the processing of the detected surrounding information and the generation of the display information may be controlled by commands spoken by the user. This enables the user to adapt the display information as desired without the need to use any tactile input devices. This simplifies the use of the head-mounted display.

The processing of the detected surrounding information and the generation of the display information may comprise a generation of a dimmed visual output information, an output information with increased contrast, an output information with reduced reflections, or an output with increased brightness. Any combinations of these output information generation may be possible. This increases in case of a use in a vehicle the driving safety under difficult driving circumstances as stated above.

Furthermore, if used in a vehicle, the display method may comprise the generation of a display information comprising a superposed driving information, a superposed vehicle information, a rear view showing the surrounding behind the vehicle as a part of the display information, or a rear view showing the surrounding behind the vehicle in case a reverse gear of the vehicle is selected. This provides the driver of the vehicle with additional information when steering the vehicle whereas at the same time he can pay full attention to the traffic in the direction he is driving to. Additionally this provides the opportunity to omit a lot of displays currently used in conventional vehicles, for example a tachometer, a display of a navigation system or the like and to omit rear view mirrors of a conventional vehicle.

Finally, the display method may comprise a detecting of a line of sight of a user and a generation of a display information according to the detected line of sight with the advantages as stated above.

### Brief description of the drawings

The invention will now be described in more detail with reference to the accompanying drawings, in which:
Fig. 1 shows a perspective view of a car provided with a head-mounted display system according to the present invention.
Fig. 2 shows a schematic view of two occupants of a vehicle wearing head-mounted displays of a head-mounted display system according to the present invention.
Fig. 3 shows a block diagram of the components of a head-mounted display system according to the present invention.
Fig. 4 shows a flow chart indicating the functioning of a display method according to the present invention.

### Detailed description of preferred embodiments

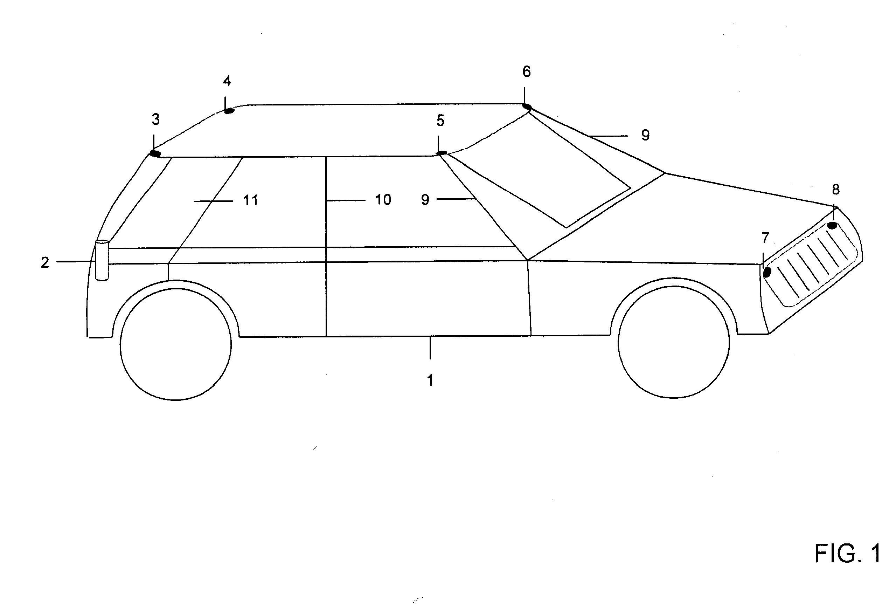

Fig. 1 shows a vehicle 1 provided with a head-mounted display system. The head-mounted display system comprises several sensors 2-8 detecting surrounding information from the surrounding of the vehicle 1. The sensors may comprise cameras, night vision devices, ultrasonic devices, or radar devices capable of detecting the surrounding and environment of the vehicle for generating a display information to be displayed to an occupant of the vehicle 1 as will be described later. As the sensors 2-8 are located outside the vehicle such that the views of the sensors are not obstructed by structural elements of the vehicle itself, for example an A-column 9, a B-column 10, a C-column 11, and (not shown) head rests, or (not shown) occupants of the vehicle. Additionally, as the sensors 2-8 are located at several positions, for example the roof top at the front side and the roof top at the back side of the vehicle and near the bumpers at the front side and the backside of the vehicle, the sensors are capable of detecting surrounding information around the whole vehicle 1 having no death angles.

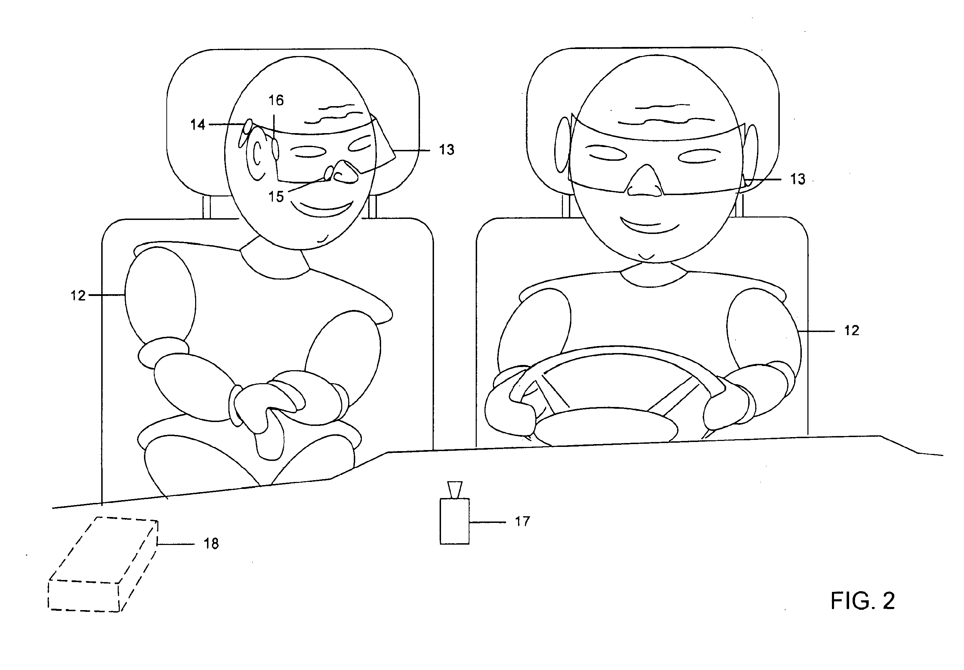

As described later, from the detected surrounding information detected by the sensors 2-8 a display information for the occupants of the vehicle 1 is generated. A display information is displayed via head-mounted displays to the occupants. Fig. 2 shows two occupants 12 seated in a vehicle 1 wearing head-mounted displays 13. The head-mounted display 13 is a device which is worn by the occupant or user like spectacles, but instead of having transparent spectacle glasses in front of the eyes of the user wearing the device, the head-mounted display provides a display projecting a display information as visual information to the eyes of the user wearing the head-mounted display. Advantageously, the head-mounted display provides two separate displays, each projecting the display information into each eye of the occupant for achieving a stereoscopic effect. As an alternative a continuous display or display foil may be provided at the head-mounted display side opposite to the eyes of the user wearing the head-mounted display for displaying the display information.

As shown in Fig. 2 according to this embodiment, there is a wireless connection to the head-mounted display which enables wearing the head-mounted display without using wires interfering with movements of the occupant. Therefore, for example a radio frequency transceiver 14 is provided within the head-mounted display 13.

Furthermore, the head-mounted display 13 is provided with a microphone 15 and a loudspeaker 16. The audio signal received by the microphone 15 and output by the loudspeaker 16 are also transmitted via the radio frequency transceiver 14.

A line of sight sensor 17 which may be a camera observing the head movements of the occupants, is provided for detecting a line of sight of a driver of the vehicle and additional (not shown) line of sight sensors for detecting a line of sight of the driver by observing the eye movement located inside the head-mounted display 13 may be provided to accurately detect the line of sight of the driver. A radio frequency transceiver 18 located for example in the dash board of the vehicle and the transceiver 14 are used for transmitting and receiving audio data, display information and line of sight information to and from the head-mounted display 13.

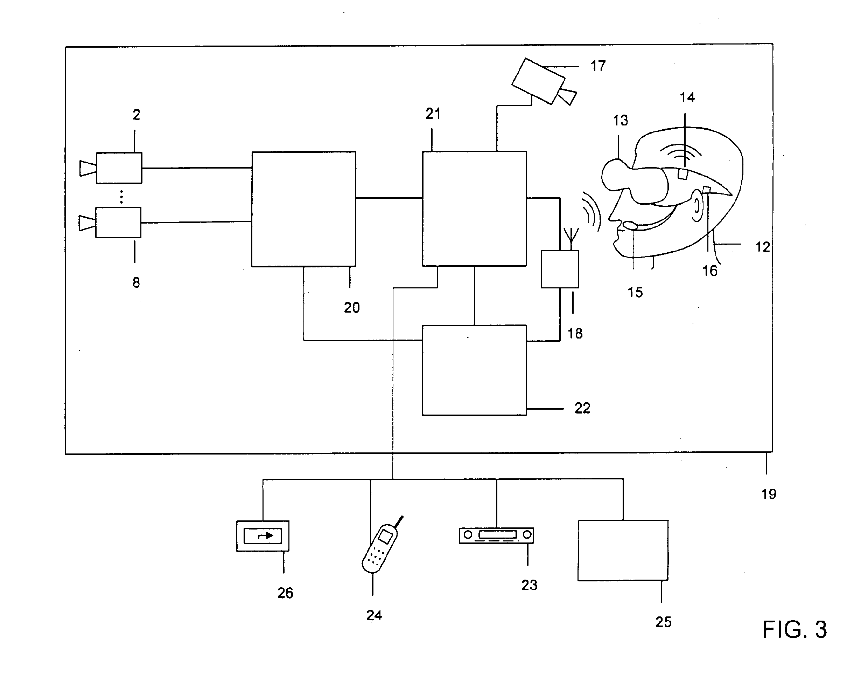

With reference to Fig. 3 the operation of a head-mounted display system 19 provided in the vehicle 1 will be described in more detail.

The head-mounted display system 19 comprises one or more sensors 2-8 for detecting surrounding information from the surrounding of the vehicle, a processing unit 20 processing the surrounding information received from the sensor 2, a display control unit 21 generating a display information to be displayed to an occupant 12 of the vehicle 1 from the processed surrounding information received from the processing unit 20, and a head-mounted display 13 displaying the display information received from the display control unit 21 to the occupant 12. The connection between the display control unit 21 and the head-mounted display 13 is accomplished by a radio frequency transmission via a radio frequency transceiver 18 connected to the display control unit 21 and a radio frequency transceiver 14 built into the head-mounted display 13. As an alternative, an infra red transmission or a wired connection may be used connecting the head-mounted display 13 to the display control unit 21.

The sensors 2-8, which may be for example cameras, radar devices, night vision devices, or ultrasonic sensoring devices, detect the environment surrounding the vehicle and provide this surrounding information to the processing unit 20.

The processing unit 20 processes the surrounding information received from the sensors 2-8 such that, especially in case of several sensors 2-8, a processed surrounding information is generated containing a combination of the surrounding information detected, i.e. for example a 360° view all around the vehicle comprising information detected by cameras combined with additional information retrieved from the ultrasonic sensoring devices and the night vision devices. Furthermore, the processing unit 20 provides an image improvement processing of the detected surrounding information by, for example generating a dimmed visual output information from the detected surrounding information in case of oncoming lights from oncoming cars or blinding sunlight at dusk or dawn, generating a visual output information with increased contrast in case of fog or twilight, generating a visual output information with reduced reflections at rainy weather or a wet road surface, or generating a visual output information with increased brightness at night, or a combination thereof.

Next, the processed surrounding information is transmitted to the display control unit 21 which generates a display information to be displayed to an occupant of the vehicle.

In the embodiment according to Fig. 3, the transmission of the display information to the head-mounted display displaying the information to the occupant is accomplished by a wireless transmission through a transceiver 18 connected to the display control unit 21 and a transceiver 14 incorporated in the head-mounted display 13 the occupant 12 is wearing. The display control unit 21 transmits an adapted display information to the occupant 12. This adaption comprises, for example, presenting the occupant 12 a viewing section corresponding to a current line of sight of the occupant. Therefore, the line of sight may be detected for example by a line of sight sensor 17, which may be a camera mounted inside the vehicle monitoring the occupant's head to determine the line of sight of the occupant, and may additionally provide an eye movement sensor or camera incorporated into the head-mounted display 13 detecting the current line of sight of the eyes of the occupant relative to the head-mounted display 13. The information from the line of sight sensor incorporated in the head-mounted display 13 may also be transmitted via the wireless transmission between the transceivers 14 and 18 to the display control unit 21. Combining the information from the line of sight sensor 17 within the compartment of the vehicle and the line of sight sensor incorporated in the head-mounted display 13, the display control unit 21 provides a display information adapted to the current line of sight of the occupant. Additionally, the display control unit 21 may insert in a part of the display area of the display information a view showing the surrounding behind the vehicle comparable to a rear view provided by a rear view mirror in traditional vehicles.

Provided with this information, the occupant or driver of the vehicle receives an improved viewing information of the surrounding of the vehicle and at the same time, as part of the viewing area, an improved rear view of the surrounding behind the vehicle. This increases the driving safety, because with the improved display information the driver can recognize dangerous situations, especially under difficult viewing conditions, much earlier than traditionally.

Furthermore, the processing of the surrounding information performed in the processing unit 20 may provide a processing emphasizing traffic lights or traffic signs such that the driver of the vehicle recognizes these information earlier and easier. This makes driving less stressfully and increases therefore the driving safety.

The head-mounted display system 19 according to the embodiment shown in Fig. 3 additionally comprises an audio processing unit 22. This audio processing unit 22 is coupled with a microphone 15 and a loudspeaker 16 provided at the head-mounted display 13 via the radio frequency transceivers 18 and 14. The audio processing unit 22 is adapted to receive and process spoken language from the occupant or driver 12. This spoken language may comprise commands for hands free controlling the processing of the surrounding information in the processing unit 20, for example commands as "increase contrast" or "increase brightness" for changing processing parameters of the processing unit 20. Furthermore, the spoken language may comprise commands controlling the display control unit 21 such as "zoom in" or "zoom out" for changing the display size of the display information. Finally, the spoken may comprise commands controlling further devices of the vehicle, for example a car radio system 23, a mobile phone 24, a cruise control unit 25, or a navigation system 26.

In return, these devices 23-26 may provide audible information via the audio processing unit 22, the transceivers 14 and 18, and the loudspeaker 16 to the occupant 12 or may provide visual information via the display control unit 21 and the head-mounted display 13 to the occupant. The audible information may comprise for example routing commands from the navigation system 26 or music and traffic information from the car radio system 23 and the visible information may comprise also routing information from the navigation system 26, or driving information, for example the current speed of the vehicle, from the cruise control unit 25 or other devices of the vehicle. Furthermore, the display control unit 21 may receive information from the vehicle concerning the state of the vehicle, for example an overheating warning of the engine of the vehicle or a seatbelt warning of an occupant of the vehicle not being belted in his seat, and provide this information as a part of the display information to the occupant or driver 12 wearing the head-mounted display 13.

In case the driver of the vehicle selects the reverse gear of the vehicle, the display control unit 21 provides a rear view as the main display information showing the surrounding behind the vehicle to the driver 12 of the vehicle. This makes it easier for the driver to drive backwards, for example when parking the car, without turning the head and without having the sight obstructed by the C-pillars and the window frames of the vehicle.

In case the head-mounted display system detects a failure within the system, for example if one of the sensors 2 has a defect or is obstructed, the head-mounted display 13 is set into a transparent viewing mode providing a transparent view through the head-mounted display 13 to the occupant or driver 12 of the vehicle. This ensures even in case of a failure of the system 19 a safe steering and controlling of the vehicle 1.

Moreover, the head-mounted display system 19 is not only useful for the driver of the vehicle, but also for other occupants of the vehicle. First, occupants seated on the backseats of the vehicle wearing the head-mounted display 13 can be provided with a view out of the vehicle which is not obstructed by the front passengers of the vehicle or a B-pillar of the vehicle. Furthermore, passengers of the vehicle may be provided during a travel with individual video and audio information provided from a car entertainment system via the head-mounted display 13 comprising the loudspeaker 16. For providing display information to several occupants of the vehicle, the display control unit 21 is adapted to provide several video streams to the several head-mounted displays 13 or as an alternative several display control units 21 are provided within the head-mounted display system 19.

Besides increasing the driving safety in that the display information provides an improved information about the surrounding of the vehicle to the driver, the head-mounted display system 19 provides with a single display, i.e. the head-mounted display 13, various information to the driver which is conventionally displayed on several displays of the vehicle. Therefore, the head-mounted display system 19 additionally saves costs for these several displays of a conventional vehicle. Furthermore, a head-mounted display system 19 can easily supplementary incorporated in a conventional vehicle providing thus comfort and increased driving safety at low cost.

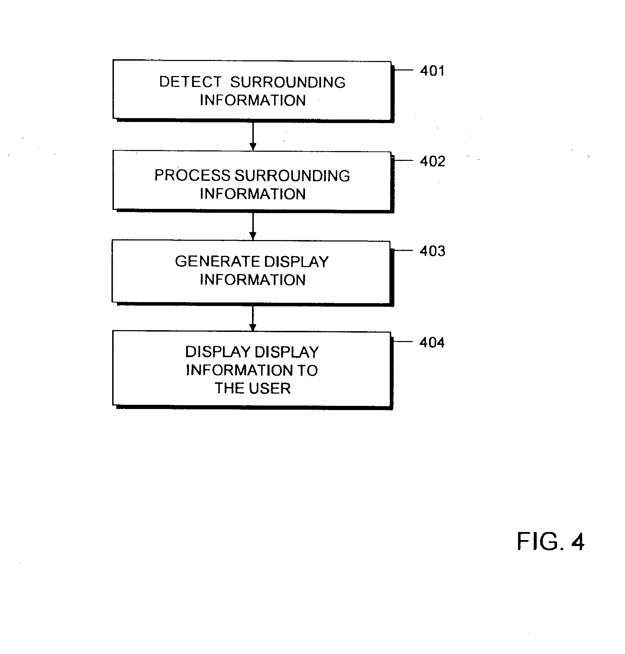

Fig. 4 shows a flow chart indicating the functioning of a display method according to the present invention.

In step 401 a surrounding information is detected. This surrounding information may comprise a front view, a rear view, and side views around a user the display method is applied to. In case the user is sitting in a vehicle like a car or a truck, the surrounding information from outside the car or truck may be detected. In case the user is a hiker or walker, the surrounding information may be detected by sensors mounted at a head-mounted display the user is wearing as will be described later.

In next step 402 the detected surrounding information is processed. This processing may comprise for example a generation of the surrounding information with increased contrast, reduced reflections, increased brightness or a reduced brightness as necessary to provide an improved surrounding information as required by a user the method is applied to.

In next step 403 a display information to be displayed to a user the method is applied to is generated from the processed surrounding information. The display information comprises for example one or more sections of the processed surrounding information, for example a combination of a front view and a rear view wherein the rear view comprises only a small portion of the display information and the front view comprises the main portion of the display information. Furthermore, the display information may comprise further information, for example routing information from a navigation system indicating a route to be followed by the user as a red line superimposed to the surrounding information, or indications for points of interest indicating for example restaurants, museums, theaters and so on when walking in a city, or indicating points of interest, for example names of a mountain or a hill comprised in the surrounding information to a user hiking through the mountains.

Finally, in step 404 the display information is displayed to the user via a head-mounted display as described above.

## Claims

1. A head-mounted display system (19), comprising:
- at least one sensor (2-8) detecting surrounding information,
- a processing unit (20) processing the surrounding information received from the at least one sensor (2-8),
- a display control unit (21) generating a display information to be displayed to an user (12) of the system (19) from the processed surrounding information received from the processing unit (20), and
- a head-mounted display (13) displaying the display information received from the display control unit (21) to the user (12).

2. The head-mounted display system (19) according to claim 1,
wherein the head-mounted display comprises a display incorporated into spectacles, the display projecting the display information as visual information to the user (12) wearing the spectacles.

3. The head-mounted display system (19) according to claim 1 or 2,
wherein the processing of the processing unit (20) comprises a generation of a dimmed visual output information from the detected surrounding information.

4. The head-mounted display system (19) according to any of the proceeding claims,
wherein the processing of the processing unit (20) comprises a generation of a visual output information with increased contrast from the detected surrounding information.

5. The head-mounted display system (19) according to any of the proceeding claims,
wherein the processing of the processing unit (20) comprises a generation of a visual output information with reduced reflections from the detected surrounding information.

6. The head-mounted display system (19) according to any of the proceeding claims,
wherein the processing of the processing unit (20) comprises a generation of a visual output information with increased brightness from the detected surrounding information.

7. The head-mounted display system (19) according to any of the proceeding claims,
wherein the display control unit (21) generates the display information comprising a superimposed routing information.

8. The head-mounted display system (19) according to any of the proceeding claims,
wherein the head-mounted display (13) comprises a loudspeaker (16) for outputting audible information to the occupant (12).

9. The head-mounted display system (19) according to any of the proceeding claims,
wherein the head-mounted display (13) provides a transparent view.

10. The head-mounted display system (19) according to any of the proceeding claims,
wherein the head-mounted display (13) system comprises furthermore a line of sight sensor (17), detecting a line of sight of an user (12) of the system, the display control unit (21) connected to the line of sight sensor (17) generates a display information according the line of sight.

11. The head-mounted display system (19) according to any of the proceeding claims,
wherein the head-mounted display (13) comprises a microphone (15) receiving speech from the user (12) and the head-mounted display system (19) comprises an audio processing unit (22) processing the received speech, upon commands comprised in the received speech the audio processing unit (22) controls the processing unit (20) and/or the display control unit (21).

12. The head-mounted display system (19) according to claim 11,
wherein upon commands comprised in the received speech the audio processing unit (22) controls further devices (23-26), the further devices (23-26) comprising a navigation system (26), a car radio system (23), a mobile music system (23), a car entertainment system, a mobile entertainment system, a mobile phone (24), and/or a cruise control system (25).

13. The head-mounted display system (19) according any of the proceeding claims, wherein
the head-mounted display system (19) is used in a vehicle (1) by a driver (12) or occupant (12) of the vehicle (1), and
the at least one sensor (2-8) is mounted at the vehicle (1), the at least one sensor (2-8) detecting surrounding information comprising the surrounding of the vehicle (1).

14. The head-mounted display system (19) according to claim 13,
wherein the display control unit (21) generates the display information comprising a superimposed vehicle information (23-26).

15. The head-mounted display system (19) according to claim 13 or 14,
wherein the head-mounted display (13) provides in a part of the display information a rear view showing the surrounding behind the vehicle (1).

16. The head-mounted display system (19) according to any of claims 13-15,
wherein the head-mounted display (13) provides a rear view as the display information showing the surrounding behind the vehicle (1) in case a reverse gear of the vehicle (1) is selected.

17. The head-mounted display system (19) according any of claims 1-12,
wherein
the at least one sensor (2-8) is mounted at the head-mounted display (13), the at least one sensor (2-8) detecting surrounding information comprising the surrounding of the user (12) wearing the head-mounted display (13).

18. A display method, comprising:
- detecting surrounding information,
- processing the detected surrounding information,
- generating a display information to be displayed to an user (12) from the processed surrounding information, and
- displaying the display information to the user (12) via a head-mounted display (13).

19. The display method according to claim 18,
wherein the head-mounted display (13) comprises a display incorporated into spectacles, the display projecting the display information as visual information to the user (12) wearing the spectacles.

20. The display method according to claim 19,
wherein the processing of the detected surrounding information and generating of the display information is controlled by commands spoken by the user (12).

21. The display method according to any of claims 18-20,
wherein the processing comprises a generation of a dimmed visual output information from the detected surrounding information.

22. The display method according to any of claims 18-21,
wherein the processing comprises a generation of a visual output information with increased contrast from the detected surrounding information.

23. The display method according to any of claims 18-22,
wherein the processing comprises a generation of a visual output information with reduced reflections from the detected surrounding information.

24. The display method according to any of claims 18-23,
wherein the processing comprises a generation of a visual output information with increased brightness from the detected surrounding information.

25. The display method according to any of claims 18-24,
wherein the display information comprises a superimposed routing information.

26. The display method according to any of claims 18-25,
furthermore detecting a line of sight of the user (12), wherein a display information is generated according to the line of sight.

27. The display method according to any of claims 18-26, wherein the display method is used in a vehicle (1), wherein
the detected surrounding information comprises the surrounding of the vehicle (1), and
the display information is displayed to an occupant (12) or driver (12) of the vehicle (1) via a head-mounted display (13).

28. The display method according to claim 27,
wherein the display information comprises a superimposed vehicle information.

29. The display method according to claim 27 or 28,
wherein a part of the display information provides a rear view showing the surrounding behind the vehicle (1).

30. The display method according to any of claims 27-29,
wherein the display information comprises a rear view showing the surrounding behind the vehicle (1) in case a reverse gear of the vehicle (1) is selected.

## Amended claims

### Amended claims in accordance with Rule 137(2) EPC.

**1.** A head-mounted display system (19), comprising:
- at least one sensor (2-8) detecting surrounding information,
- a processing unit (20) processing the surrounding information received from the at least one sensor (2-8),
- a display control unit (21) generating a display information to be displayed to an user (12) of the system (19) from the processed surrounding information received from the processing unit (20), and
- a head-mounted display (13) displaying the display information received from the display control unit (21) to the user (12),
**characterized in that** the display control unit (21) generates the display information comprising a superimposed routing information.

**2.** The head-mounted display system (19) according to claim 1,
wherein the head-mounted display comprises a display incorporated into spectacles, the display projecting the display information as visual information to the user (12) wearing the spectacles.

**3.** The head-mounted display system (19) according to claim 1 or 2,
wherein the processing of the processing unit (20) comprises a generation of a dimmed visual output information from the detected surrounding information.

**4.** The head-mounted display system (19) according to any of the proceeding claims,
wherein the processing of the processing unit (20) comprises a generation of a visual output information with increased contrast from the detected surrounding information.

**5.** The head-mounted display system (19) according to any of the proceeding claims,
wherein the processing of the processing unit (20) comprises a generation of a visual output information with reduced reflections from the detected surrounding information.

**6.** The head-mounted display system (19) according to any of the proceeding claims,
wherein the processing of the processing unit (20) comprises a generation of a visual output information with increased brightness from the detected surrounding information.

**7.** The head-mounted display system (19) according to any of the proceeding claims,
wherein the head-mounted display (13) comprises a loudspeaker (16) for outputting audible information to the occupant (12).

**8.** The head-mounted display system (19) according to any of the proceeding claims,
wherein the head-mounted display (13) provides a transparent view.

**9.** The head-mounted display system (19) according to any of the proceeding claims,
wherein the head-mounted display (13) system comprises furthermore a line of sight sensor (17), detecting a line of sight of an user (12) of the system, the display control unit (21) connected to the line of sight sensor (17) generates a display information according the line of sight.

**10.** The head-mounted display system (19) according to any of the proceeding claims,
wherein the head-mounted display (13) comprises a microphone (15) receiving speech from the user (12) and the head-mounted display system (19) comprises an audio processing unit (22) processing the received speech, upon commands comprised in the received speech the audio processing unit (22) controls the processing unit (20) and/or the display control unit (21).

**11.** The head-mounted display system (19) according to claim 10 ,
wherein upon commands comprised in the received speech the audio processing unit (22) controls further devices (23-26), the further devices (23-26) comprising a navigation system (26), a car radio system (23), a mobile music system (23), a car entertainment system, a mobile entertainment system, a mobile phone (24), and/or a cruise control system (25).

**12.** The head-mounted display system (19) according any of the proceeding claims, wherein
the head-mounted display system (19) is used in a vehicle (1) by a driver (12) or occupant (12) of the vehicle (1), and
the at least one sensor (2-8) is mounted at the vehicle (1), the at least one sensor (2-8) detecting surrounding information comprising the surrounding of the vehicle (1).

**13.** The head-mounted display system (19) according to claim 12 ,
wherein the display control unit (21) generates the display information comprising a superimposed vehicle information (23-26).

**14.** The head-mounted display system (19) according to claim 12 or 13,
wherein the head-mounted display (13) provides in a part of the display information a rear view showing the surrounding behind the vehicle (1).

**15.** The head-mounted display system (19) according to any of claims 12-14,
wherein the head-mounted display (13) provides a rear view as the display information showing the surrounding behind the vehicle (1) in case a reverse gear of the vehicle (1) is selected.

**16.** The head-mounted display system (19) according any of claims 1-11,
wherein
the at least one sensor (2-8) is mounted at the head-mounted display (13), the at least one sensor (2-8) detecting surrounding information comprising the surrounding of the user (12) wearing the head-mounted display (13).

**17.** A display method, comprising:
- detecting surrounding information,
- processing the detected surrounding information,
- generating a display information to be displayed to an user (12) from the processed surrounding information, and
- displaying the display information to the user (12) via a head-mounted display (13),
**characterized in that** the display information comprises a superimposed routing information.

**18.** The display method according to claim 17,
wherein the head-mounted display (13) comprises a display incorporated into spectacles, the display projecting the display information as visual information to the user (12) wearing the spectacles.

**19.** The display method according to claim 18,
wherein the processing of the detected surrounding information and generating of the display information is controlled by commands spoken by the user (12).

**20.** The display method according to any of claims 17-19,
wherein the processing comprises a generation of a dimmed visual output information from the detected surrounding information.

**21.** The display method according to any of claims 17-20,
wherein the processing comprises a generation of a visual output information with increased contrast from the detected surrounding information.

**22.** The display method according to any of claims 17-21,
wherein the processing comprises a generation of a visual output information with reduced reflections from the detected surrounding information.

**23.** The display method according to any of claims 17-22,
wherein the processing comprises a generation of a visual output information with increased brightness from the detected surrounding information.

**24.** The display method according to any of claims 17-23,
furthermore detecting a line of sight of the user (12), wherein a display information is generated according to the line of sight.

**25.** The display method according to any of claims 17-24, wherein the display method is used in a vehicle (1), wherein
the detected surrounding information comprises the surrounding of the vehicle (1), and
the display information is displayed to an occupant (12) or driver (12) of the vehicle (1) via a head-mounted display (13).

**26.** The display method according to claim 25,
wherein the display information comprises a superimposed vehicle information.

**27.** The display method according to claim 25 or 26,
wherein a part of the display information provides a rear view showing the surrounding behind the vehicle (1).

**28.** The display method according to any of claims 25-27,
wherein the display information comprises a rear view showing the surrounding behind the vehicle (1) in case a reverse gear of the vehicle (1) is selected.
